# EUROPÄISCHE PATENTSCHRIFT

(11) **EP 0 698 357 B1**
(45) Veröffentlichungstag und Bekanntmachung des Hinweises auf die Patenterteilung: **28.10.1998**
(21) Anmeldenummer: 95113094.7
(22) Anmeldetag: 21.08.1995
(51) Int. Cl.: A47B 88/00, A47B 95/00

(54) **Möbelbeschlag, insbesondere Verbindungsbeschlag**
Fitting for furniture, especially connector
Accessoire pour meubles, en particulier élément d'assemblage

(30) Priorität: 26.08.1994 AT 1644/94
(43) Veröffentlichungstag der Anmeldung: 28.02.1996
(73) Patentinhaber: Julius Blum Gesellschaft m.b.H., 6973 Höchst (AT)
(72) Erfinder: Brüstle, Klaus, A-6973 Höchst (AT); Netzer, Emanuel, A-6973 Höchst (AT); Huber, Edgar, A-6971 Hard (AT)
(74) Vertreter: Torggler, Paul, Dr.

(56) Entgegenhaltungen:
- AT-B- 391 063
- AT-B- 391 987
- DE-A- 2 610 200

## Beschreibung

Die Erfindung bezieht sich auf einen Möbelbeschlag zum Verbinden zweier Möbelteile mit mindestens einem Dübel, einem Spreizteil für den Dübel und einem an einem der Möbelteile mittels des Dübels befestigbaren Beschlagkörper, der als Verbindungselement für einen am anderen Möbelteil angebrachten Befestigungsbeschlag, beispielsweise als Halteteil einer Frontblendenbefestigungsvorrichtung, ausgeführt ist.

Aus der DE 26 10 200 A1 ist ein Möbelbeschlag zum Verbinden zweier Möbelplatten bekannt, der eine in eine der Möbelplatten einsetzbaren Dübel mit einem Spreizteil aufweist und einen in die andere Möbelplatte einsetzbaren Drehteil. Durch Verdrehen des Drehteiles wird der Dübel über den Spreizteil verspannt. Der Möbelbeschlag ist nur in Verbindung mit beiden Möbelplatten funktionsfähig. Es ist nicht möglich, einen Beschlagteil allein in einer der Möbelplatten sicher zu verankem.

Aus der AT-PS 391 409 und der AT-PS 391 987 sind Befestigungsbeschläge zur Befestigung der Frontblende einer Schublade an den Schubladenzargen bekannt. Diese Beschläge bestehen aus einem den Halteteil bildenden Beschlagkörper, der an der Frontblende verankert ist und aus einem Tragteil, der in der Schubladenzarge fixiert ist und in denen der Halteteil einhängbar ist.

In der AT-PS 391 063 ist ein Verbindungsbeschlag zur Befestigung einer Schubladenreling an einer Frontblende bekannt.

Aufgabe der Erfindung ist es, einen Möbelbeschlag der eingangs erwähnten Art zu schaffen, der zur Befestigung einer Frontblende einer Schubladenrückwand an Schubladenzargen oder zur Befestigung einer Reling an der Frontblende dient und der ohne Werkzeug montierbar ist. Dabei soll der Beschlag sehr kompakt ausgeführt sein und keine zusätzlichen Spannhebel od. dgl. aufweisen.

Die erfindungsgemäße Aufgabe wird dadurch gelöst, daß der Spreizteil durch Drehen oder Kippen des drehbar gelagerten Beschlagkörpers bewegbar und in die Spreiz- bzw. Lösestellung bringbar ist, wodurch der Beschlagkörper an dem Möbelteil, in den der Dübel ragt, arretierbar ist.

Weitere Merkmale der Erfindung sind Gegenstand der abhängigen Ansprüche 2 bis 8.

Nachfolgend werden verschiedene Ausführungsbeispiele der Erfindung anhand der Figuren der beiliegenden Zeichnungen eingehend beschrieben.
Die Fig. 1 zeigt schematisch ein Schaubild eines Möbels mit einer Schublade, bei der die Frontblende mittels eines erfindungsgemäßen Beschlages an der Schubladenzarge befestigt ist,
die Fig. 2 zeigt ein auseinandergezogenes Schaubild eines Ausführungsbeispieles eines erfindungsgemäßen Beschlagkörpers, und zwar eines Halteteiles für eine Frontblende einer Schublade,
die Fig. 3 zeigt ein Schaubild desselben Beschlagkörpers in der Lösestellung,
die Fig. 4 zeigt ein Schaubild desselben Beschlagkörpers in der verspannten Stellung,
die Fig. 5 zeigt ein Schaubild eines Abschnittes einer Frontblende mit zwei Ausführungsbeispielen eines erfindungsgemäßen Beschlagkörpers in der Lösestellung,
die Fig. 6 zeigt das gleiche Schaubild wie die Fig. 5, wobei der Beschlagkörper in der Spannstellung gezeichnet sind,
die Fig. 7 zeigt einen Schnitt durch eine Frontblende und den Dübelbereich eines Beschlagkörpers in der Lösestellung,
die Fig. 8 zeigt einen Schnitt durch den Dübelbereich eines Beschlagkörpers und eine Seitenansicht des Beschlagkörpers in der Spannstellung,

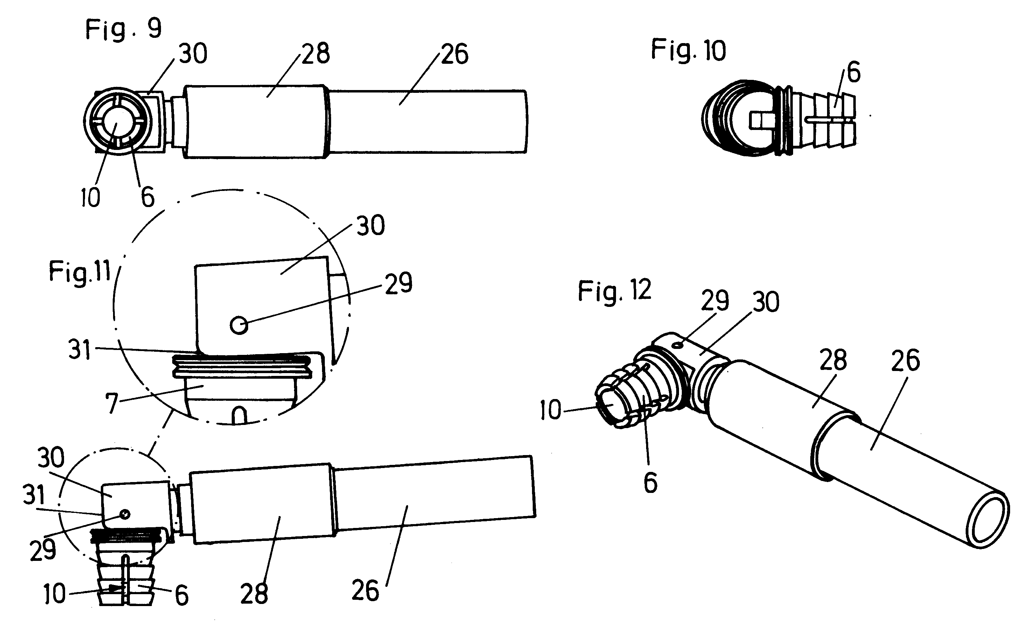

die Fig. 9 bis 11 zeigen verschiedene Ansichten eines erfindungsgemäßen Beschlagkörpers, der als Relinghalterung ausgeführt ist,
die Fig. 13 zeigt ein auseinandergezogenes Schaubild eines weiteren Ausführungsbeispieles eines als Frontblendenhalteteil ausgeführten Beschlagkörpers,
die Fig. 14 zeigt ein Schaubild des Beschlagkörpers gemäß Fig. 13 in der Lösestellung,
die Fig. 15 zeigt ein Schaubild des gleichen Beschlagkörpers in der Spannstellung,
die Fig. 16 zeigt ein auseinandergezogenes Schaubild eines weiteren Ausführungsbeispieles eines als Halteteil für eine Frontblende ausgeführten Beschlagkörpers,
die Fig. 17 zeigt ein Schaubild des gleichen Beschlagkörpers in der Lösestellung,
die Fig. 18 zeigt ein auseinandergezogenes Schaubild eines weiteren Ausführungsbeispieles eines erfindungsgemäßen Beschlagkörpers,
die Fig. 19 zeigt ein Schaubild desselben Beschlagkörpers in der Lösestellung, und
die Fig. 20 zeigt ein Schaubild dieses Beschlagkörpers in der Spannstelllung.

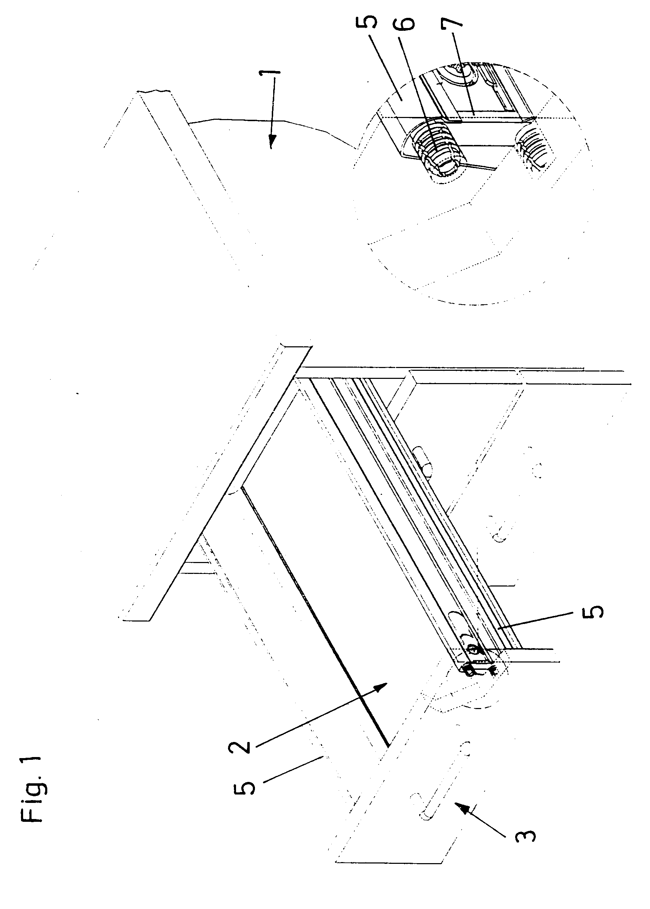

In der Fig. 1 ist der Möbelkorpus mit dem Bezugszeichen 1, die Schublade mit dem Bezugszeichen 2, die Frontblende mit dem Bezugszeichen 3 und die Schubladenzarge mit dem Bezugszeichen 5 versehen.

Die Frontblende 3 ist an den Schubladenzargen 5 mittels einer Frontblendenbefestigung montiert, die aus einem in der Schubladenzarge 5 angeordneten nicht gezeigten Tragteil und dem als Halteteil ausgebildeten erfindungsgemäßen Beschlagkörper 8 besteht, der mittels Dübeln 6 unmittelbar in der Frontblende 3 verankert ist.

Es sind zwei Dübel 6 vorgesehen, die über eine Platte 7 miteinander verbunden sind. Vorzugsweise sind die Dübel 6 und die Platte 7 einstückig aus Kunststoff gespritzt.

In den Dübeln 6 befinden sich Spreizteile 10, die als Zapfen mit konischen Enden ausgeführt sind. Die Spreizteile 10 sind über eine Achse 11 mit den Flanschen 4 des Beschlagkörpers 8 verbunden. Die Flansche 4 weist eine gerundete Ecke 9 auf. Der Beschlagkörper 8 steht seitlich von der Frontblende 3 ab. In die Frontblende 3 ragen lediglich die Dübel 6 und die Spreizteile 10.

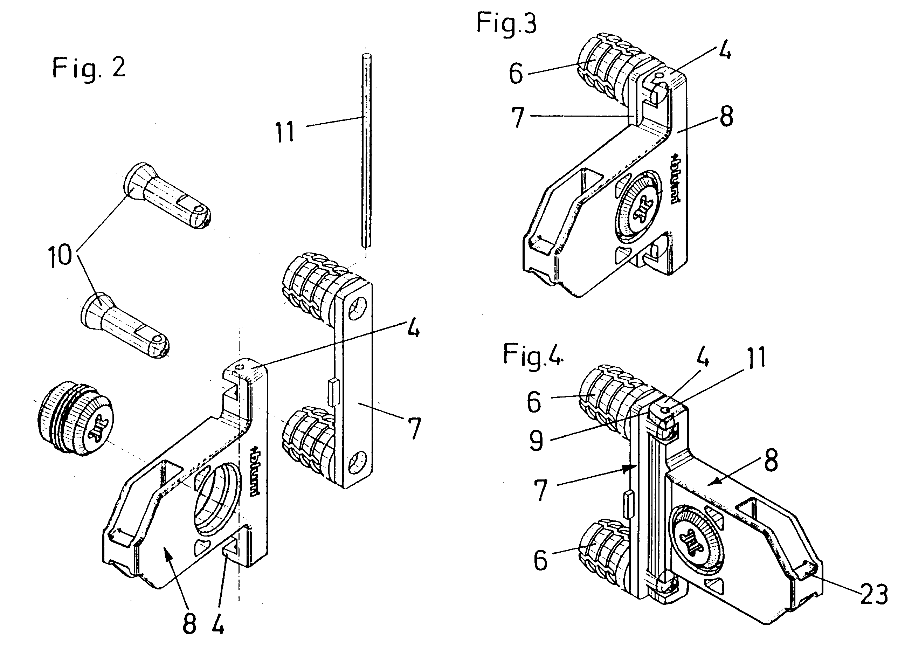

Befindet sich der Beschlagkörper 8 in der in der Fig. 3 gezeigten gekippten Stellung, d. h. er ist etwa senkrecht zu den Dübeln 6 ausgerichtet, dann sind die Spreizteile 10 gelöst und der gesamte Beschlagkörper 8 kann mit der Platte 7 und den Dübeln 6 in die Bohrungen 22 in der Frontblende 3 eingesetzt werden.

Wird der Beschlagkörper 8 in die in der Fig. 4 gezeigte Funktionsstellung gekippt, werden die Spreizteile 10 über die Flansche 4 angezogen und die Dübel 6 werden innerhalb der Bohrungen 22 verspreizt. Die Frontblende 3 ist nun mit den Beschlagkörpern 8 in die Schubladenzargen 5 einhängbar, wobei die Verankerungsteile 23 des Beschlagkörpers 8 in die Tragteile der Frontblendenbefestigung einhängbar sind. In den Figuren der Zeichnung ist noch eine Verstellschraube, die der Seitenverstellung der Frontblende dient und die im Beschlagkörper 8 lagert, eingezeichnet.

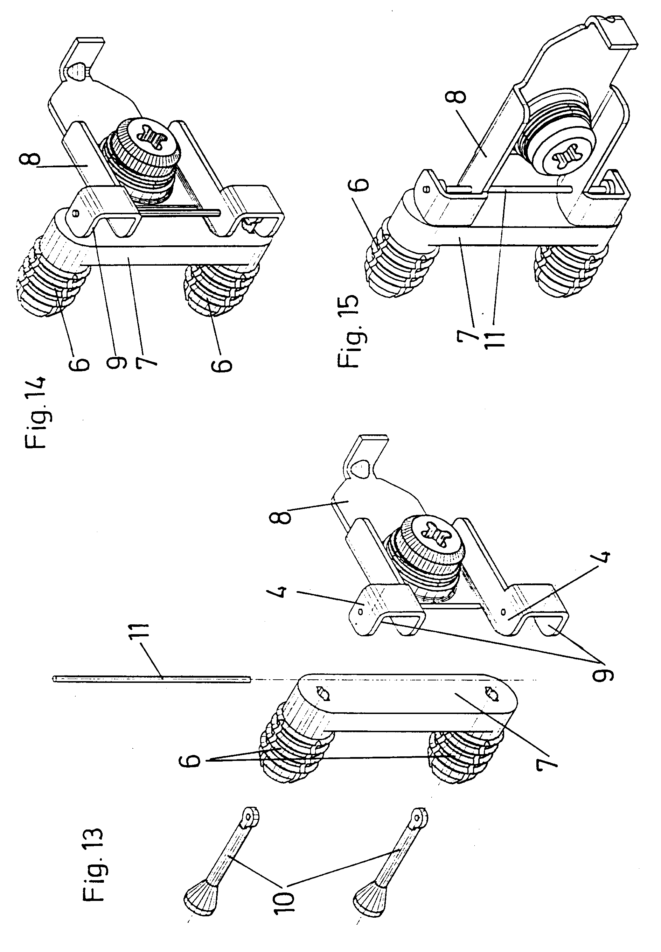

Das Ausführungsbeispiel der Fig. 13 bis 15 entspricht von der Funktion her vollständig dem Ausführungsbeispiel der Fig. 2 bis 4. Der Beschlagkörper 8 ist jedoch als gestanzter Blechteil ausgeführt, während der Beschlagkörper 8 gemäß dem Ausführungsbeispiel nach den Fig. 2 bis 4 als Kunststoffteil oder als Spritzgußteil ausgeführt sein kann.

Die Verankerung der Reling 26 erfolgt mittels einer Relingverankerung, die aus einem Beschlagkörper 28 und einem Dübel 6 besteht. Auch der Beschlagkörper 28 ist nicht in die Frontblende 3 eingesetzt, sondern ragt frei zur Rückseite der Schublade. Im Dübel 6 befindet sich ein Spreizteil 10, der ebenso wie in den zuvor beschriebenen Ausführungen als Zapfen mit konischen Ende ausgeführt ist und über eine Achse 29 am Beschlagkörper 28 lagert.

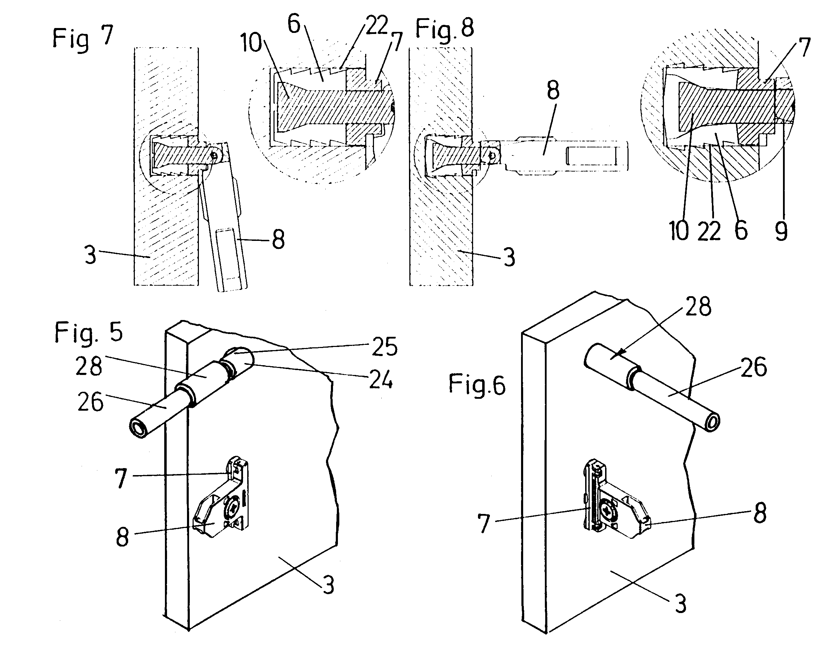

Der Beschlagkörper 28 weist beim Dübel 6 wiederum seitliche Flansche 30 auf, die mit Abstützkanten 31 versehen sind. Wird die Reling 26 zusammen mit dem Beschlagkörper 28 in die in der Fig. 5 gezeigte Stellung gekippt, ist der Dübel 6 unverspannt und er kann in eine Bohrung 22 in der Frontblende 3 eingesetzt bzw. aus dieser entfernt werden.

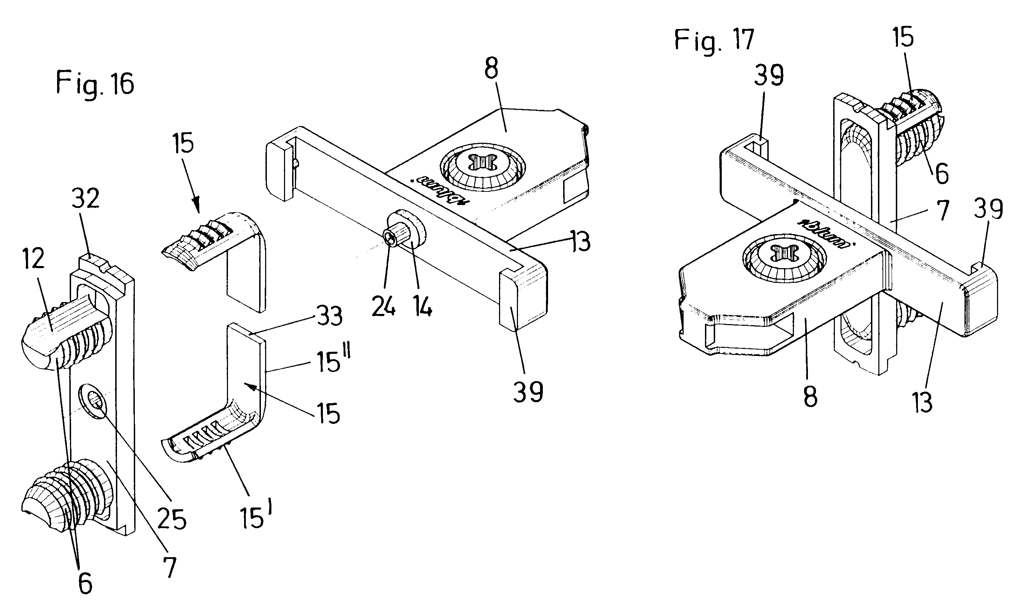

Durch Hochkippen der Reling 26 und des Beschlagkörpers 28 in die in der Fig. 6 gezeigten Stellung wird der Spreizteil 10 angezogen, der Dübel 6 wird verspannt und der gesamte Beschlagkörper 28 in der Frontblende 3 verankert. Im Ausführungsbeispiel nach den Fig. 16 und 17 werden die Spreizteile 15 von zwei Spreizwinkeln gebildet. Die Dübel 6 sind wiederum mittels einer Platte 7 verbunden. Die Dübel 6 weisen segmentförmige Aussparungen 12 auf. In Montagelage befinden sich im Bereich der Aussparungen 12 die Spreizarme 15' der Spreizwinkel.

Zueinandergerichtete Arme 15'' liegen auf der den Dübeln 6 abgewandten Seite der Platte 7 auf bzw. sind in einer Aussparung der Platte 7 aufgenommen.

Der Beschlagkörper 8, der im Ausführungsbeispiel ebenfalls als Halteteil für eine Frontblendenbefestigung ausgeführt ist, weist eine Abdeckplatte 13 auf. Die Abdeckplatte 13 ist in der Mitte mit einem Exzenter 14 versehen und weist einen Stift 24 auf, der in ein Loch 25 in der Platte 7 ragt.

Weiters ist die Abdeckplatte 13 mit zwei Haken 39 versehen, die in fixierter Lage die Platte 7 bei Kanten 32 untergreifen.

In der Lösestellung ist der Beschlagkörper 8 zur Platte 7, wie in der Fig. 17 gezeigt, um 90° verdreht. Der Exzenter 14 befindet sich zwischen den Stirnkanten 33 der Arme 15'' der Spreizwinkel, die die Spreizteile 15 bilden.

In dieser Stellung kann der Beschlag mit der Platte 7 und den Dübeln 6 in die Bohrlöcher 22 in der Frontblende 3 eingesetzt werden. Durch Verdrehen des Beschlagkörpers 8, sodaß die Abdeckplatte 13 des Beschlagkörpers 8 parallel zur Platte 7 ausgerichtet ist, werden die Spreizwinkel durch den Exzenter 14 auseinandergedrückt und die Spreizarme 15' liegen an der Wandung der Bohrung 22 an, wodurch der Beschlagkörper 8 mit den Dübeln 6 und der Platte 7 in der Frontblende 3 fixiert ist.

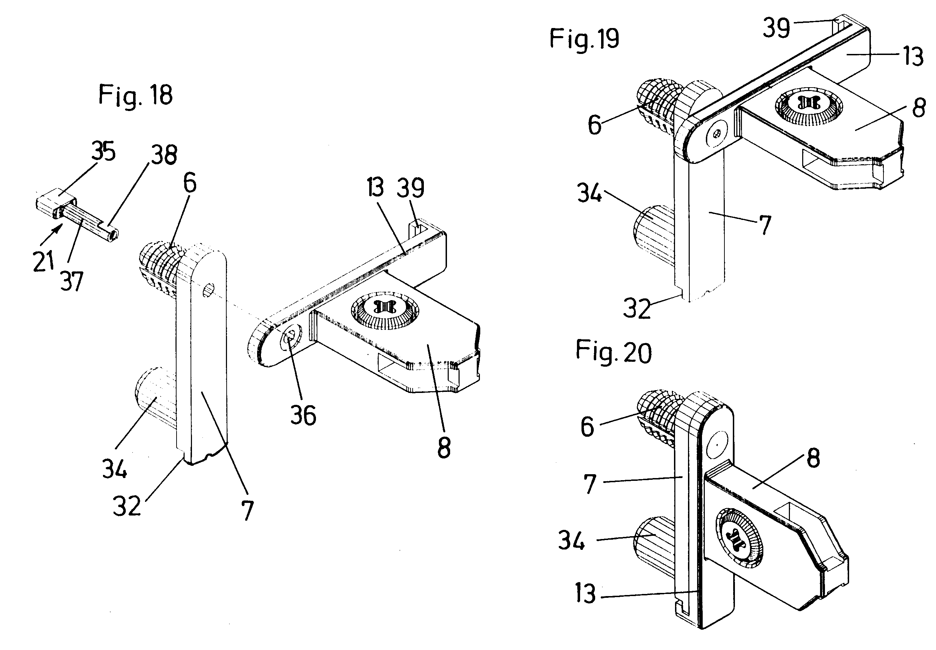

Im Ausführungsbeispiel nach den Fig. 18 bis 20 ist die Platte 7 mit einem Dübel 6 und einem Positionierungszapfen 34 versehen. Im Dübel 6 befindet sich der Spreizteil 21, der an seinem freien Ende mit einer Spannocke 35 versehen ist. Der Spreizteil 21 ist drehfest mit der Abdeckplatte 13 des Beschlagkörpers 8 verbunden, beispielsweise formschlüssig in eine Bohrung 36 eingesetzt, wobei der Schaft 37, der die Spannocke 38 trägt, mit Abflachungen 38 versehen ist.

Die Abdeckplatte 13 weist einen Haken 39 auf, der in der Fixierstellung, die in der Fig. 20 gezeigt ist, die Kante 32 der Platte 7 beim Positionierungszapfen 34 untergreift.

In der in der Fig. 19 gezeigten Stellung des Beschlagkörpers 8 kann der Dübel 6 in die Bohrung 22 in der Frontblende 3 eingesetzt werden. Durch Verdrehen des Beschlagkörpers 8 in die in der Fig. 20 gezeigte Stellung wird der Spannocken 35 gedreht und spreizt die Backen des Dübels 6 auseinander. Der Beschlagkörper und die Platte 7 mit dem Dübel 6 sind somit an der Frontblende 3 fixiert.

## Patentansprüche

1. Möbelbeschlag zum Verbinden zweier Möbelteile mit mindestens einem Dübel (6), einem Spreizteil (10) für den Dübel und ein an einem der Möbelteile mittels des Dübels befestigbaren Beschlagkörper (8, 28), der als Verbindungselement für einen am anderen Möbelteil angebrachten Befestigungsbeschlag, beispielsweise als Halteteil einer Frontblendenbefestigungsvorrichtung, ausgeführt ist, dadurch gekennzeichnet, daß der Spreizteil (10; 15; 21) durch Drehen oder Kippen des drehbar gelagerten Beschlagkörpers (8; 28) bewegbar und in die Spreiz- bzw. Lösestellung bringbar ist, wodurch der Beschlagkörper (8; 28) an dem Möbelteil (3), in den der Dübel (6) ragt, arretierbar ist.

2. Möbelbeschlag nach Anspruch 1, dadurch gekennzeichnet, daß der oder die Dübel (6) mit einer Platte (7) versehen ist bzw. sind und daß der Beschlagkörper (8, 28), der über eine Achse (11) an dieser Platte (7) gelagert ist, mit mindestens einer exzentrisch ausgebildeten Kante (9, 31) an dieser Platte (7) anliegt.

3. Möbelbeschlag nach Anspruch 1, dadurch gekennzeichnet, daß der Spreizteil (21) einen im Dübel (6) drehbar angeordneten Spannocken (35) aufweist und daß der Spreizteil (21) im Beschlagkörper (8) unverdrehbar gehalten ist.

4. Möbelbeschlag nach Anspruch 3, dadurch gekennzeichnet, daß der einzige Dübel (6) über eine Platte (7) mit einem Positionierungszapfen (34) verbunden ist und daß der Beschlagkörper (8) einen Haken (26) aufweist, der das beim Positionierungszapfen (34) befindliche Ende der Platte (7) untergreift.

5. Möbelbeschlag nach Anspruch 1, dadurch gekennzeichnet, daß der Spreizteil (15) zwei Spreizwinkel umfaßt, die mit einem Steg (15') in je eine Aussparung (12) im Dübel (6) ragen und sich mit ihren anderen Stegen (15''), die einander entgegengerichtet sind, an einem dem Beschlagkörper (8) zugehörigen Exzenter (14) abstützen.

6. Möbelbeschlag nach Anspruch 5, dadurch gekennzeichnet, daß die Dübel (6) an einer Platte (7) angeformt sind und daß der Beschlagkörper (8) eine Abdeckplatte (13) aufweist, die an ihren Enden mit Haken (26) versehen ist, die die Enden der Platte (7) hintergreifen.

7. Möbelbeschlag nach einem der Ansprüche 1 bis 6, dadurch gekennzeichnet, daß der Beschlagkörper (8) als Halteteil für eine Frontblende (3) einer Schublade ausgeführt ist.

8. Möbelbeschlag nach einem der Ansprüche 1 bis 6, dadurch gekennzeichnet, daß der Beschlagkörper (28) als Halteteil für eine Schubladenreling (26) ausgeführt ist.

## Claims

1. Furniture fitting for connecting two furniture parts having at least one dowel (6), a spreading part (10) for the dowel and a fitting body (8, 28) which can be fastened to one of the furniture parts by means of the dowel and is designed as a connecting element for a fastening fitting attached to the other furniture part, for example as a holding part of a front panel-fastening device, characterized in that the spreading part (10; 15; 21) can be moved by rotating or tilting the rotatably mounted fitting body (8; 28) and brought into the spreading and releasing position, with the result that the fitting body (8; 28) can be secured to the furniture part (3) into which the dowel (6) projects.

2. Furniture fitting according to Claim 1, characterized in that the dowel or dowels (6) is or are provided with a plate (7) and in that the fitting body (8, 28), which is mounted on this plate (7) by way of a pivot pin (11), bears against this plate (7) by means of at least one eccentrically constructed edge (9, 31).

3. Furniture fitting according to Claim 1, characterized in that the spreading part (21) has a tensioning cam (35) rotatably arranged in the dowel (6) and in that the spreading part (21) is held non-rotatably in the fitting body (8).

4. Furniture fitting according to Claim 3, characterized in that the single dowel (6) is connected by way of a plate (7) to a positioning peg (34) and in that the fitting body (8) has a hook (26) [sic] which engages under that end of the plate (7) which is situated near the positioning peg (34).

5. Furniture fitting according to Claim 1, characterized in that the spreading part (15) comprises two spreading angles which project by one leg (15') into a respective recess (12) in the dowel (6) and are supported by their other legs (15''), which are directed towards each other, against an eccentric (14) associated with the fitting body (8).

6. Furniture fitting according to Claim 5, characterized in that the dowels (6) are integrally moulded on a plate (7) and in that the fitting body (8) has a covering plate (13) whose ends are provided with hooks (26) which engage behind the ends of the plate (7).

7. Furniture fitting according to one of Claims 1 to 6, characterized in that the fitting body (8) is designed as a holding part for a front panel (3) of a drawer.

8. Furniture fitting according to one of Claim 1 to 6, characterized in that the fitting body (28) is designed as a holding part for a drawer railing (26).

## Revendications

1. Accessoire pour meubles pour relier deux parties de meuble comprenant au moins une cheville (6), une pièce d'écartement (10) pour la cheville et un corps d'accessoire (8, 28) pouvant être fixé sur l'une des parties de meuble au moyen de la cheville, qui est réalisé sous la forme d'un élément de liaison pour un accessoire de fixation placé sur l'autre partie de meuble, par exemple sous la forme d'une pièce de retenue d'un dispositif de fixation de cache frontal, caractérisé en ce que la pièce d'écartement (10 ; 15; 21) peut être actionnée par rotation ou basculement du corps d'accessoire (8; 28) logé de façon pivotante et être amené dans la position d'écartement ou de libération, ce par quoi que le corps d'accessoire (8; 28) peut être bloqué sur la partie de meuble (3) dans laquelle s'étend la cheville (6).

2. Accessoire pour meubles selon la revendication 1, caractérisé en ce que la ou les cheville(s) (6) est/sont pourvue(s) d'une plaque (7) et que le corps d'accessoire (8, 28), qui est maintenu sur cette plaque (7) par l'intermédiaire d'un axe (11), s'appuie sur cette plaque (7) avec au moins un bord (9, 31) réalisé de façon excentrique.

3. Accessoire pour meubles selon la revendication 1, caractérisé en ce que la pièce d'écartement (21) présente une came de serrage disposée de façon rotative dans la cheville (6) et que la pièce d'écartement (21) est maintenue dans le corps d'accessoire (8) de façon à ne pas pouvoir tourner.

4. Accessoire pour meubles selon la revendication 3, caractérisé en ce que la cheville (6) unique est reliée par une plaque (7) à un tenon de positionnement (34) et le corps d'accessoire (8) présente un crochet (26) qui saisit par-dessous l'extrémité de la plaque (7) située près du tenon de positionnement.

5. Accessoire pour meubles selon la revendication 1, caractérisé en ce que la pièce d'écartement (15) comprend deux équerres d'écartement qui dépassent chacune avec une barrette (15') dans un évidement (12) dans la cheville (6) et prennent appui avec leurs autres barrettes (15''), qui sont orientées l'une vers l'autre, sur un excentrique (14) appartenant au corps d'accessoire (8).

6. Accessoire pour meubles selon la revendication 5, caractérisé en ce que les chevilles (6) sont formées sur une plaque (7) et en ce que le corps d'accessoire (8) présente une plaque de recouvrement (13) qui est munie de crochets (26) à ses extrémités, qui saisissent les extrémités de la plaque (7) par l'arrière.

7. Accessoire pour meubles selon l'une des revendications 1 à 6, caractérisé en ce que le corps d'accessoire (8) est réalisé comme pièce de retenue pour un cache frontal (3) d'un tiroir.

8. Accessoire pour meubles selon l'une des revendications 1 à 6, caractérisé en ce que le corps d'accessoire (28) est réalisé comme pièce de retenue pour une rambarde de tiroir (26).
